Europäisches Patentamt

European Patent Office

Office européen des brevets

(19)

(11) **EP 0 986 468 B1**

(12) **EUROPÄISCHE PATENTSCHRIFT**

(45) Veröffentlichungstag und Bekanntmachung des Hinweises auf die Patenterteilung:
**16.10.2002   Patentblatt 2002/42**

(51) Int Cl.7: **B41C 1/045**

(21) Anmeldenummer: **98934804.0**

(22) Anmeldetag: **27.05.1998**

(86) Internationale Anmeldenummer:
**PCT/DE98/01443**

(87) Internationale Veröffentlichungsnummer:
**WO 98/055304 (10.12.1998 Gazette 1998/49)**

(54) **VERFAHREN ZUR SIGNALVERARBEITUNG**

SIGNAL PROCESSING METHOD

PROCEDE DE TRAITEMENT DE SIGNAUX

(84) Benannte Vertragsstaaten:
**CH DE ES FR GB IT LI NL**

(30) Priorität: **02.06.1997   DE 19722996**

(43) Veröffentlichungstag der Anmeldung:
**22.03.2000   Patentblatt 2000/12**

(73) Patentinhaber: **Hell Gravure Systems GmbH 24148 Kiel (DE)**

(72) Erfinder:
• **LÜBCKE, Bernd**
  **D-24113 Molfsee (DE)**
• **WIECHERING, Christian**
  **D-24147 Kiel (DE)**

• **JACHT, Armin**
  **D-18109 Rostock (DE)**

(74) Vertreter: **Seemann, Ralph, Dr. Dipl.-Phys.**
**Patentanwälte,**
**Niedmers & Seemann,**
**Van-der-Smissen-Strasse 3**
**22767 Hamburg (DE)**

(56) Entgegenhaltungen:
**WO-A-94/19900          US-A- 3 769 455**
**US-A- 4 013 831          US-A- 4 259 697**
**US-A- 4 670 271          US-A- 5 424 845**
**US-A- 5 663 803**

EP 0 986 468 B1

**Beschreibung**

Die Erfindung bezieht sich auf das Gebiet der elektronischen Reproduktionstechnik und betrifft ein Verfahren und eine Schaltungsanordnung zur Signalverarbeitung in einer elektronischen Graviermaschine zur Gravur von Druckzylindern für den Tiefdruck.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Tiefdruckraster angeordneten Vertiefungen, Näpfchen genannt, in die Mantelfläche des Druckzylinders. Das Graviersteuersignal wird in einer Signalaufbereitungsstufe durch Überlagerung eines die Tonwerte zwischen "Schwarz" und "Weiß" repräsentierenden Graviersignals mit einem periodischen Rastersignal (Vibration) gebildet. Während das Rastersignal eine vibrierende Hubbewegung des Gravierstichels zur Erzeugung des Rasters bewirkt, steuert das Graviersignal entsprechend den wiederzugebenden Tonwerten die Schnittiefen der in die Mantelfläche des Druckzylinders gravierten Näpfchen.

In der Signalverarbeitungsstufe erfolgt unter anderem eine Kalibrierung des Graviersignals auf die Schnittiefen des Gravierstichels für "Licht" (Weiß) und "Tiefe" (Schwarz) und die Überlagerung des korrigierten Graviersignals mit dem Rastersignal zur Erzeugung des Graviersteuersignals.

In einer herkömmlichen Signalverarbeitungsstufe werden die Signale analog verarbeitet, indem die Eingangssignale in digitaler Form angeliefert, digital/analog gewandelt und in analogen Netzwerken miteinander verknüpft werden, wobei das resultierende Signal dann in einem analogen Verstärker verstärkt und als Graviersteuersignal für das Gravierorgan ausgegeben wird.

Die Signalverarbeitung mit analogen Netzwerken hat den Nachteil, daß das Übertragungsverhalten der Netzwerke nicht ohne weiteres optimiert werden kann und durch Toleranzen und Temperaturabhängigkeiten der Bauelemente nicht genügend stabil ist, um eine gute Gravierqualität zu erzeugen.

Dokument WO-A-9 634 746 offenbart ein Verfahren zur Signalverarbeitung in einer elektronischen Graviermaschine zur Gravur von Druckzylindern für den Tiefdruck mittels eines von einem analogen Graviersteuersignal gesteuerten Gravierstichel eines Gravierorgans, bei dem

(i) Gravurdaten, welche zu gravierende Tonwerte zwischen "Schwarz" und "Weiß" repräsentieren, bereitgestellt werden,

(ii) Funktionswertdaten eines periodischen Rastersignals zur Erzeugung eines Rasters bereitgestellt werden,

(iii) digitale Einstellparameter zur Kalibrierung des Graviersteuersignals zwischen den Tonwerten "Schwarz" und "Weiß" bereitgestellt werden,

(iv) die Gravurdaten als Eingangsgröße durch den Einstellparameter gewichtet werden, wobei der Einstellparameter veränderlich ist,

(v) die gewichteten Gravurdaten und die Funktionswertdaten numerisch in Gravursteuerdaten als Ausgangsgröße umgewandelt werden und

(vi) die Gravursteuerdaten in das analoge und verstärkte Graviersteuersignal für das Gravierorgan umgewandelt werden, wobei der Gravierstichel des Gravierorgans eine Folge von in dem Raster angeordneten Näpfchen in den Druckzylinder eingraviert und das Gravierorgan zur flächenhaften Gravur der Näpfchen eine in Achsrichtung des Druckzylinders gerichtete Vorschubbewegung an dem Druckzylinder entlang ausführt.

Aufgabe der vorliegenden Erfindung ist es daher, ein Verfahren und eine Schaltungsanordnung zur digitalen Signalverarbeitung in einer elektronischen Graviermaschine zur Gravur von Druckzylindern für den Tiefdruck, derart zu verbessern, daß die Eingangsdaten der Übertragungsfunktion einschließlich von Korrekturdaten für einer Schnittiefenkorrektur veränderbar sind.

Diese Aufgabe wird bezüglich des Verfahrens durch die Merkmale des Anspruchs 1 und bezüglich der Schaltungsanordnung durch die Merkmale des Anspruchs 11 gelöst.

Vorteilhafte Weiterbildungen und Ausgestaltungen sind in den Unteransprüchen angegeben.

Die Erfindung wird nachfolgend anhand der Fig. 1 bis 5 näher erläutert.

Es zeigen:

Fig. 1  ein prinzipielles Blockschaltbild einer Graviermaschine zur Gravur von Druckzytindern mit einer Signalaufbereitungsstufe,

Fig. 2  ein erstes Ausführungsbeispiel der erfindungsgemäßen Signalaufbereitungsstufe,

Fig. 3  ein zweites Ausführungsbeispiel der erfindungsgemäßen Signalaufbereitungsstufe,

Fig. 4    ein erstes Ausführungsbeispiel für einen Signalprozessor und

Fig. 5    ein zweites Ausführungsbeispiel für einen Signalprozessor.

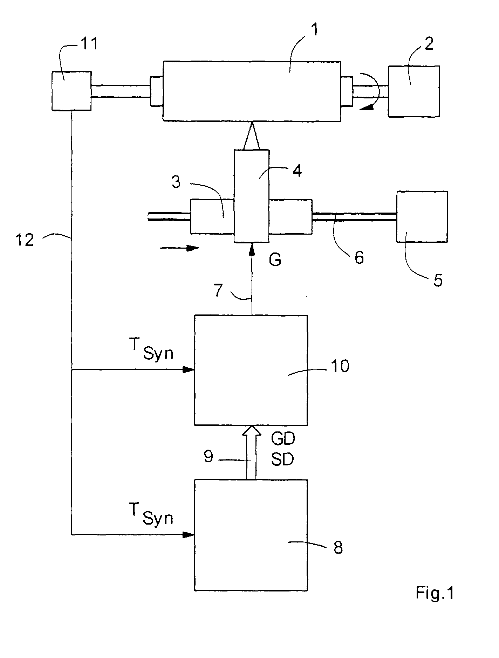

Fig. 1 zeigt ein prinzipielles Blockschaltbild einer Graviermaschine zur Gravur von Druckzylindern. Ein Druckzylinder (1) wird von einem Rotationsantrieb (2) rotatorisch angetrieben. Ein auf einem Gravierwagen (3) montiertes Gravierorgan (4) mit einem Gravierstichel als Schneidwerkzeug bewegt sich mit Hilfe einer durch einen Vorschubantrieb (5) angetriebenen Spindel (6) in Achsrichtung an dem rotierenden Druckzylinder (1) entlang.

Der durch ein analoges Graviersteuersignal (G) auf einer Leitung (7) gesteuerte Gravierstichel des Gravierorgans (4) schneidet gravierlinienweise eine Folge von in einem Tiefdruckraster angeordneten Näpfchen in die Mantelfläche des rotierenden Druckzylinders (1), während sich das Gravierorgan (4) axial an dem Druckzylinder (1) entlang bewegt. Das Gravierorgan (4) ist beispielsweise als Gravierorgan mit einem elektromagnetischen Antrieb für den Gravierstichel ausgebildet.

Während ein periodisches Rastersignal eine vibrierende Hubbewegung des Gravierstichels zur Erzeugung des Tiefdruckrasters bewirkt, bestimmen Gravurdaten (GD) entsprechend den zu gravierenden Tonwerten zwischen "Licht" und "Tiefe" die Eindringtiefen des Gravierstichels in die Mantelfläche des Druckzylinders (1).

Die Gravurdaten (GD) werden in einem Gravurdatenrechner (8) Gravierlinie für Gravierlinie bereitgestellt, wobei jedem zu gravierenden Näpfchen ein Gravurdatum von mindestens einem Byte zugeordnet ist, welches unter anderem als Gravierinformation den zu gravierenden Tonwert enthält. In dem Gravurdatenrechner (8) werden außerdem Steuerdaten (SD) für die Signalverarbeitung bereitgestellt.

Gravurdaten (GD) und Steuerdaten (SD) werden über einen Datenbus (9) an eine Signalverarbeitungsstufe (10) weitergegeben, in der das Graviersteuersignal (G) für das Gravierorgan (4) erzeugt wird.

Zur Synchronisierung der Signalverarbeitung mit der Drehbewegung des Druckzylinders (1) ist ein Impulsgeber (11) mechanisch an den Druckzylinder (1) gekoppelt. Der Impulsgeber (11) erzeugt eine Synchronisierungtaktfolge ($T_{SYN}$), die über eine Leitung (12) an Gravurdatenrechner (8) und an die Signalaufbereitungsstufe (10) gegeben wird.

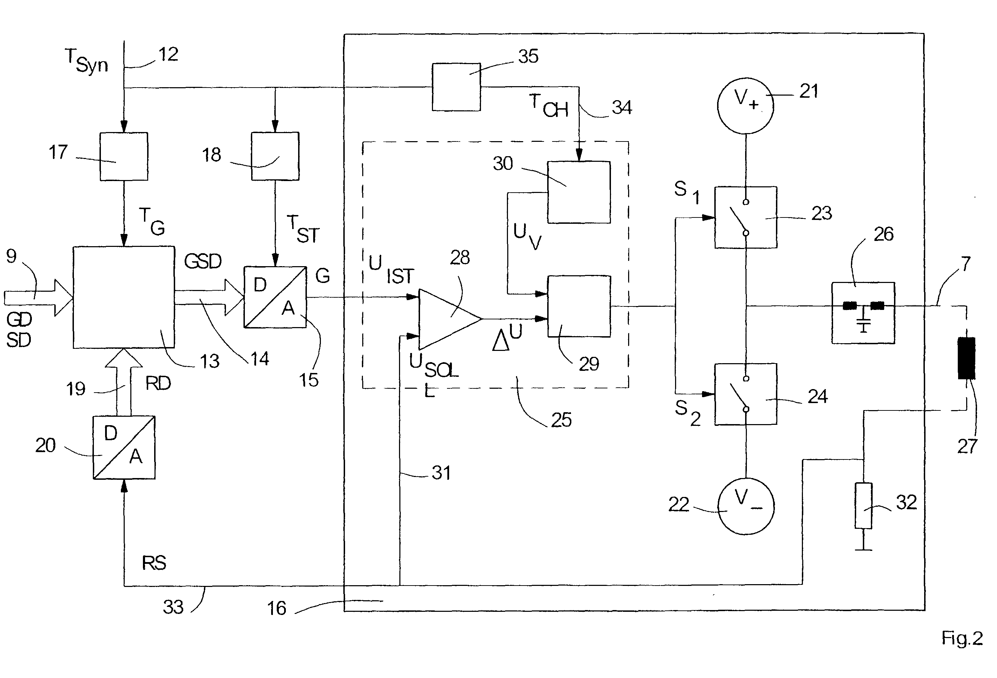

Fig. 2 zeigt ein erstes Ausführungsbeispiel für die erfindungsgemäße Signalaufbereitsungsstufe (10).

In der Signalaufbereitungsstufe (10) werden die Gravurdaten (GD) und die Steuerdaten (SD) über den Datenbus (9) an einen Signalprozessor (13) übermittelt. In dem Signalprozessor (13) werden aus gespeicherten Funktionswertdaten (FD) das periodische Rastersignal (Vibration) zur Erzeugung des Tiefdruckrasters berechnet. In dem Signalprozessor (13) sind ferner in einer Look-Up-Table (LUT) Korrekturdaten (KD) für eine Schnittiefenkorrektur des Gravierstichels und Einstellwerte für "Licht" ($EP_L$) und Tiefe ($EP_T$) adressierbar abgelegt.

In dem Signalprozessor (13) werden erfindungsgemäß die Gravurdaten (GD) durch eine Übertragungsfunktion numerisch in Gravursteuerdaten (GSD) umgewandelt, wobei die Übertragungskoeffizienten ($k_x$) der Übertragungsfunktion und/oder die Übertragungsfunktion selbst in vorteilhafter Weise durch die Steuerdaten (SD) verändert werden können. Die Steuerdaten (SD) beeinflussen beispielsweise die Einstellwerte für "Licht" ($EP_L$) und "Tiefe" ($EP_T$), Amplitude und Phase des Rastersignals (Vibration) über die Funktionswertdaten (FD) und die Korrekturdaten (KD) für die Schnittiefekorrektur, wobei die Einstellwerte "Licht" die Verstärkung und die Einstellwerte "Tiefe" den Offset des Signalprozessors (13) beeinflussen.

Die Übertragungsfunktion wird dabei von den Funktionswertdaten (FD) des Rastersignals, den Korrekturdaten (KD) für die Schnittiefekorrektur und den Einstellwerten für "Licht" ($EP_L$) und "Tiefe" ($EP_T$) bestimmt, so daß sich beispielsweise die Graviersteuerdaten (GSD) aus den Gravurdaten (GD) wie folgt ergeben:

$$GSD = (GD \times k_1 + KD \times k_2) \times (EP_L \times k_3) + EP_T \times k_4 + FD \times k_5$$

In dieser Gleichung bedeuten:

GD =      Gravurdaten (Eingangsdaten)
GSD =     Graviersteuerdaten (Ausgangsdaten)
EP =      Einstellwerte
FD =      Funktionswertdaten
KD =      Korrekturdaten und
$k_x$ =      Übertragungskoeffizienten

Als Signalprozessor (13) wird ein Prozessor verwendet, der schnelle Fließkommaoperationen ermöglicht, vorzugsweise ein Digitaler Signal Prozessor (DSP). Als Signalprozessor (13) kann beispielsweise der Digital Signal Prozessor vom Typ TMS 320C31 der Firma Texas Instruments eingesetzt werden. Bei einem solchen Digitalen Signal Prozessor können in bevorzugter Weise über die Steuerdaten die Eingangsdaten und/oder die Berechnungs- und Verknüpfungsalgorithmen für die Eingangsdaten verändert werden.

Die aus dem Signalprozessor (13) ausgegebenen Gravursteuerdaten (GSD) gelangen über einen Datenbus (14) auf mindestens einen D/A-Wandler (15), der das analoge Graviersteuersignal (G) erzeugt. Das analoge Graviersteuersignal (G) wird dann in einem nachgeschalteten analogen Stromverstärker (16) verstärkt und über die Leitung (7) an das Gravierorgan (4) ausgegeben.

Aus der Synchronisierungstaktfolge ($T_{SYN}$) wird durch Frequenzuntersetzung in einem ersten Frequenzteiler (17) eine Graviertaktfolge ($T_G$) abgeleitet, welche die Signalverarbeitung in dem Signalprozessor (13) synchronisiert. Eine in einem zweiten Frequenzteiler (18) erzeugte Steuertaktfolge ($T_{ST}$) synchronisiert den A/D-Wandler (15). Die Frequenz der Graviertaktfolge ($T_G$) bestimmt die Frequenz des periodischen Rastersignals (Gravierfrequenz) und damit zusammen mit der Umfangsgeschwindigkeit des Druckzylinders (1) und der axialen Vorschubgeschwindigkeit des Gravierorgans (4) die Geometrie des Tiefdruckrasters bei der Gravur.

Die Verwendung eines Digitalen Signal Prozessors ermöglicht den Anschluß mehrerer D/A-Wandler, die durch in den Ausgangsdaten des Signalprozessors (13) enthaltenen Adreß-Bits selektiv aktiviert werden können. Ferner können dem Signalprozessor (13) Rückkopplungsdaten (RD) für eine digitale Regelung über einen Steuerbus (19) zugeführt werden. Dazu werden analoge Rückkopplungssignale (RS) in einem A/D-Wandler (20) in die Rückkopplungsdaten (RD) umgewandelt.

Der analoge Stromverstärker (16) ist in bevorzugter Weise als geschalteter Stromverstärker ausgebildet, so daß bei der Signalverstärkung ein hoher Wirkungsgrad erreicht wird.

Der geschaltete Stromverstärker (16) ist im wesentlichen aus einer Spannungsquelle, im Ausführungsbeispiel aus zwei Spannungsquellen (21, 22) für die Spannungen ($V_+$) und ($V_-$), zwei beispielsweise aus Schalttransistoren gebildeten elektronischen Schaltern (23, 24), die durch pulsbreitenmodulierte Steuersignale ($S_1$, $S_2$) betätigbar sind, einem Pulsbreitenmodulator (25) zur Erzeugung der Steuersignale ($S_1$, $S_2$) und aus einem Siebglied (26) aufgebaut.

Als Last ist die Erregerspule (27) des elektromagnetischen Antriebssystems des Gravierorgans (4) gestrichelt angedeutet, die von dem verstärkten Ausgangsstrom des geschalteten Stromverstärkers (16) als Graviersteuersignal (G) für das Gravierorgan (4) auf der Leitung (7) durchflossen wird.

Durch das Zu- und Abschalten der Spannungsquellen (21, 22) entsteht am Eingang des Siebgliedes (26) eine rechteckförmige Spannung mit den Amplituden $V_+$ und $V_-$, die durch das Siebglied (26) geglättet wird, so daß am Ausgang des Siebgliedes (26) eine mittlere Gleichspannung zur Verfügung steht, deren Größe von den Einschaltintervallen der elektronischen Schalter (23, 24) abhängig ist.

Der Pulsbreitenmodulator (25) besteht aus einem Regelverstärker (28), einem Komparator (29) und einem Vergleichssignalgenerator (30). Dem Regelverstärker (28) wird das von dem A/D-Wandler (15) gelieferte Graviersteuersignal (G) als Sollspannung ($U_{SOLL}$) und eine Istspannung ($U_{IST}$) über eine Leitung (31) als Maß für den Ausgangsstrom des Stromverstärkers (16) zugeführt, die als Spannungsabfall an einem Meßwiderstand (32) erzeugt wird.

Die in dem Regelverstärker (25) gebildete Regelabweichung ($\Delta U$) wird dem einen Eingang des Komparators (29) zugeführt, dessen zweiter Eingang mit einer in dem Vergleichsgenerator (30) gewonnenen sägezahnförmigen oder dreieckförmigen Vergleichsspannung ($U_V$) beaufschlagt ist. In dem Komparator (29) wird die Vergleichsspannung ($U_V$) mit der Regelabweichung ($\Delta U$) verglichen und aus dem Vergleich die impulsbreitenmodulierten Steuersignale ($S_1$, $S_2$) gewonnen, deren Impulsbreiten der Regelabweichung ($\Delta U$) proportional sind.

Die Istspannung ($U_{IST}$) kann außerdem als Rückkopplungssignal (RS) über eine Leitung (33) auf den A/D-Wandler (20) zwecks einer digitalen Regelung unter Einbeziehung des Signalprozessors (13). zurückgekoppelt werden.

Der Vergleichssignalgenerator (30) wird durch eine Choppertaktfolge ($T_{CH}$) auf einer Leitung (34) synchronisiert.

Falls die Choppertaktfolge ($T_{CH}$) in einem nicht phasenstarr mit der Synchronisierungstaktfolge ($T_{SYN}$) oder mit der Graviertaktfolge ($T_G$) gekoppelten Taktgenerator erzeugt wird, erweist es sich als vorteilhaft, eine Choppertaktfolge ($T_{CH}$) mit einer durch ein Rauschsignal modulierten Chopperfrequenz zu verwenden. Durch das "Verrauschen" der Choppertaktfolge ($T_{CH}$) wird in vorteilhafter Weise erreicht, daß in dem Stromverstärker (16) ein stabiles Graviersteuersignal (G) erzeugt wird, wodurch in der Gravur störende periodische Muster verhindert werden, welche die Gravierqualität mindern.

Zur Verhinderung solcher störender Muster erweist es sich alternativ als vorteilhaft, die Chopperfrequenz der Choppertaktfolge ($T_{CH}$) und die Gravierfrequenz der Graviertaktfolge ($T_G$), vorzugsweise mit einem bestimmten Frequenzverhältnis, starr miteinander zu koppeln.

In diesem Fall kann die Choppertaktfolge ($T_{CH}$), wie in Fig. 2 dargestellt, durch Frequenzteilung mittels eines Frequenzuntersetzers (35) aus der Synchronisierungstaktfolge ($Ts_{yn}$) erzeugt werden. Alternativ kann die Choppertaktfolge ($T_{CH}$) auch durch Frequenzvervielfachung mittels einer Phase Locked Loop-Schaltung (PLL-Schaltung) aus der Graviertaktfolge ($T_G$) mit der Gravierfrequenz abgeleitet werden. Die Chopperfrequenz ist in vorteilhafter Weise ein Vielfaches der Gravierfrequenz und wird auf die Eigenschaften des geschalteten Stromverstärkers (16), beispielsweise auf die Filtereigenschaften des Siebgliedes, (26) hin optimiert.

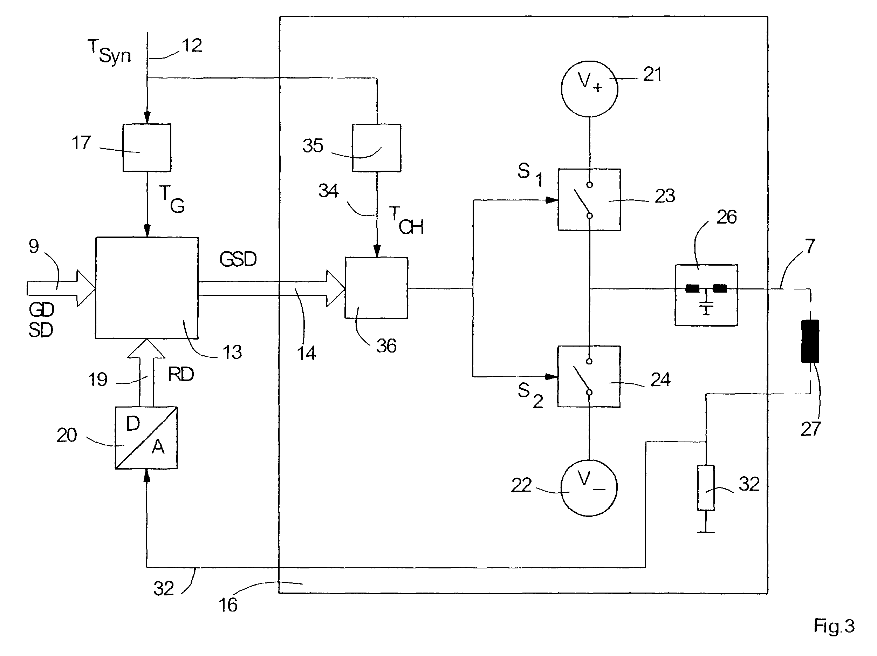

Fig. 3 zeigt ein zweites Ausführungsbeispiel für die erfindungsgemäße Signalverarbeitungsstufe (1), die sich von dem ersten Ausführungsbeispiel dadurch unterscheidet, daß der D/A-Wandler (15) entfällt und der Pulsbreitenmodulator (25) in dem geschalteten Stromverstärker (16) durch einen Timer (36) ersetzt wird. Der Timer (36) wird direkt von Gravursteuerdaten (GSD) am Ausgang des Signalprozessors (13) angesteuert und setzt die Gravursteuerdaten (GSD) in die pulsbreitenmodulierten Steuersignale (S1, S2) für die beiden elektronischen Schalter (23, 24) um.

In diesem Fall wird der Timer (36) durch eine Choppertaktfolge ($T_{CH}$) auf der Leitung (34) synchronisiert, wobei die Choppertaktfolge ($T_{CH}$) auf dieselbe Art und Weise wie in dem Ausführungsbeispiel in Fig. 2 erzeugt werden kann. Bei Verwendung eines Timers kann die Choppertaktfolge ($T_{CH}$) auch noch durch ein in einem numerischen Zufallsgenerator gewonnenen Zufallssignal verrauscht werden.

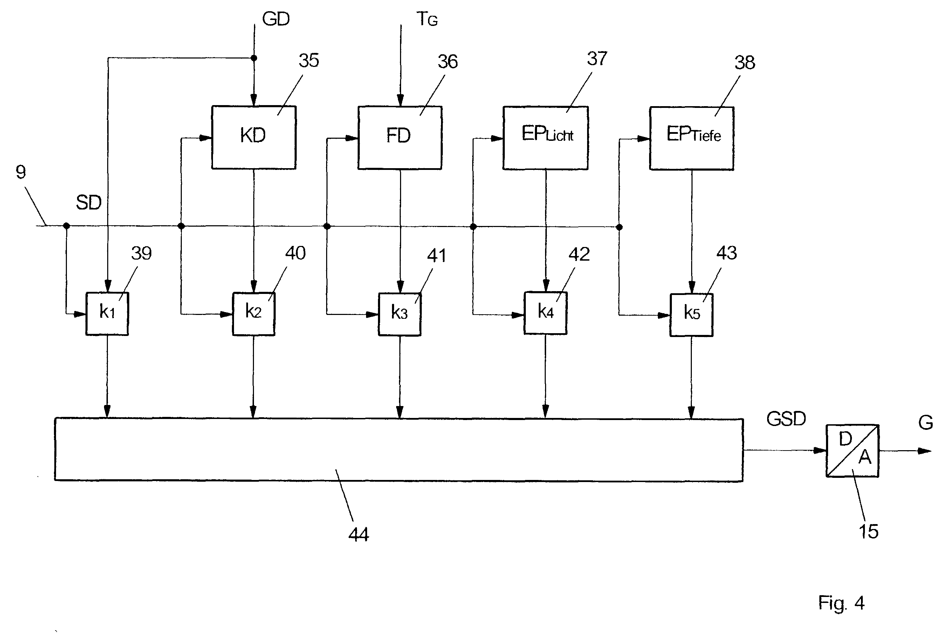

Fig. 4 zeigt ein erstes Ausführungsbeispiel für einen Signalprozessor (13). Der Signalprozessor (13) weist zwei Tabellenspeicher (35, 36) und zwei Parameterspeicher (37, 38) auf. In dem ersten Tabellenspeicher (35) ist die Korrekturwert-Tabelle KD = f(GD) für die Schnittiefenkorrektur und in dem zweiten Tabellenspeicher (36) eine Vibrations-Tabelle von Funktionswertdaten (FD) zur Erzeugung der Vibration geladen. Mit Hilfe der Steuerdaten (SD) auf dem Datenbus (9) können neue Tabellen geladen werden. Beispielsweise läßt sich durch Änderung der Vibrations-Tabelle die Phase und die Form des Vibrationssignals ändern. Die Parameterspeicher (37, 38) enthalten die Einstellwerte ($EP_L$, $EP_T$) zur Einstellung von "Licht" und "Tiefe".

Der erste Tabellenspeicher(35) wird durch die Gravurdaten (GD) adressiert. Die Funktionswertdaten (FD) werden durch die Graviertaktfolge ($T_G$) aus dem zweiten Tabellenspeicher (36) ausgelesen. Die zur Eichung erforderlichen Einstellwerte ($EP_L$, $EP_T$) werden durch die Steuerdaten (SD) aufgerufen. Die Gravurdaten (GD) auf dem Datenbus (9) und die aus den jeweiligen Speichern (35, 36, 37, 38) ausgelesenen Größen werden in Multiplizierstufen (39, 40, 41, 42, 43) mit den dort gespeicherten Übertragungskoeffizienten ($k_x$) gewichtet, die durch die Steuerdaten (SD) modifiziert werden können.

Die gewichteten Größen werden einem Rechner (44) zugeführt, in dem die Graviersteuerdaten (GSD) nach der Gleichung

$$GSD = (GD \times k_1 + KD \times k_2) \times (EP_L \times k_3) + EP_T \times k_4 + FD \times k_5$$

berechnet und dann in dem Digital/Analog-Wandler (15) in das analoge Graviersteuersignal (G) umgewandelt werden.

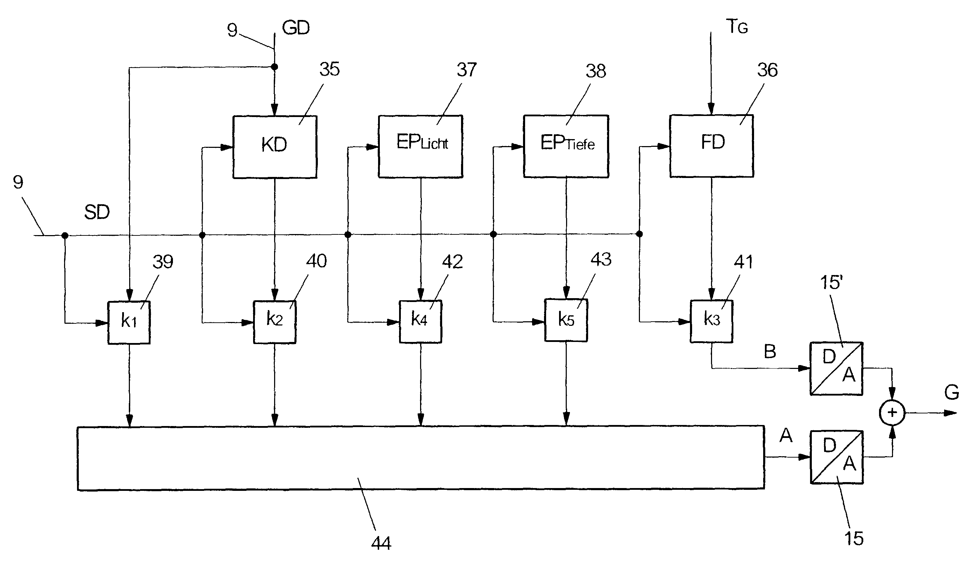

Fig. 5 zeigt ein zweites Ausführungsbeispiel für den Signalprozessor (13) bei dem die Gravurdaten (GD) und die Funktionswertdaten (FD) zur Erzeugung der Vibration in zwei getrennten Verarbeitungszweigen weiterverarbeitet werden. Es werden in dem Rechner (44) erste Daten A = (GD $\times k_1$ + KD $\times k_2$) $\times$ ($EP_L \times k_3$) + $EP_T \times k_4$ berechnet und in dem D/A-Wandler (15) in ein analoges erstes Signal (A) gewandelt. Zweite Daten B = FD $\times k_5$ werden in einem separaten D/A-Wandler (15') in ein analoges zweites Signal (B) gewandelt. Anschließend werden das erste Signal (A) und das zweite Signal (B) analog zu dem analogen Graviersteuersignal (G) verknüpft. Bei diesem Ausführungsbeispiel kann in vorteilhafter Weise im Verarbeitungszweig der Gravurdaten eine Filterung zur Verbesserung des Graviersteuersignals (G) vorgenommen werden.

**Patentansprüche**

**1.** Verfahren zur Signalverarbeitung in einer elektronischen Graviermaschine zur Gravur von Druckzylindern für den Tiefdruck mittels eines von einem analogen Graviersteuersignal (G) gesteuerten Gravierstichel eines Gravierorgans (4), bei dem

a) Gravurdaten GD, welche zu gravierende Tonwerte zwischen "Schwarz" und "Weiß" repräsentieren, bereitgestellt werden,

b) Funktionswertdaten FD eines periodischen Rastersignals zur Erzeugung eines Rasters bereitgestellt werden,

c) digitale Einstellparameter $EP_L$, $EP_T$ zur Kalibrierung des Graviersteuersignals (G) zwischen den Tonwerten "Schwarz" und "Weiß" bereitgestellt werden,

d) Korrekturdaten KD für eine Schnittiefenkorrektur zum Ausgleich einer mechanischen Abnutzung des Gravierstichels des Gravierorgans (4) bereitgestellt werden,

e) die Gravurdaten GD, die Funktionswertdaten FD, die digitalen Einstellparameter $EP_L$, $EP_T$ und die Korrekturdaten KD als Eingangsgrößen durch die Übertragungskoeffizienten $k_n$ einer Übertragungsfunktion gewich-tet werden,

f) die Eingangsgrößen und/oder die Übertragungskoeffizienten $k_n$ der Übertragungsfunktion durch Steuerda-

ten (SD) verändert werden,

g) die gewichteten Eingangsgrößen durch die digitale Übertragungsfunktion miteinander verknüpft und numerisch in Gravursteuerdaten GSD als Ausgangsgröße gemäß der Beziehung

$$GSD = [(k_1 \times GD + k_2 \times KD) \times (k_3 \times EP_L) + k_4 \times EP_T] + k_5 \times FD$$

umgewandelt werden und

h) die Gravursteuerdaten GSD in das analoge und verstärkte Graviersteuersignal (G) für das Gravierorgan (4) umgewandelt werden, wobei der Gravierstichel des Gravierorgans (4) eine Folge von in dem Raster angeordneten Näpfchen in den Druckzylinder (1) eingraviert und das Gravierorgan (4) zur flächenhaften Gravur der Näpfchen eine in Achsrichtung des Druckzylinders (1) gerichtete Vorschubbewegung an dem Druckzylinder (1) entlang ausführt.

2. Verfahren nach Anspruch 1, **dadurch gekennzeichnet, daß** zur Signalverarbeitung ein Digitaler Signal Prozessor (13) verwendet wird.

3. Verfahren nach Anspruch 1 oder 2, **dadurch gekennzeichnet, daß**

- aus der Drehbewegung des Druckzylinders (1) eine Synchronisierungstaktfolge ($T_{SYN}$) erzeugt wird und
- die Signalverarbeitung mittels der Übertragungsfunktion durch eine durch Frequenzteilung aus der Synchronisierungstaktfolge ($T_{SYN}$) abgeleitete. Taktfolge ($T_G$) gesteuert wird.

4. Verfahren nach Anspruch 3, **dadurch gekennzeichnet, daß** die Frequenz der abgeleiteten Taktfolge ($T_G$) der Frequenz des periodischen Rastersignals entspricht.

5. Verfahren nach einem der Ansprüche 1 bis 4, **dadurch gekennzeichnet, daß** das analoge Graviersteuersignal (G) zur Ansteuerung des Gravierorgans (4) in einem geschalteten Stromverstärker (16) verstärkt wird.

6. Verfahren nach Anspruch 5, **dadurch gekennzeichnet, daß** der geschaltete Stromverstärker (16) durch eine Choppertaktfolge ($T_{CH}$) synchronisiert wird.

7. Verfahren nach Anspruch 6, **dadurch gekennzeichnet, daß**

- die Choppertaktfolge ($T_{CH}$) in einem Taktgenerator erzeugt wird, der nicht mit der Drehbewegung der Druckzylinders (1) synchronisiert ist und
- die Frequenz der Choppertaktfolge ($T_{CH}$) durch ein Rauschsignal moduliert wird.

8. Verfahren nach Anspruch 6, **dadurch gekennzeichnet, daß**

- eine aus der Drehbewegung des Druckzylinders (1) abgeleitete Synchronisierungstaktfolge ($T_{SYN}$) erzeugt wird und
- die Choppertaktfolge ($T_{CH}$) aus der Synchronisierungstaktfolge ($T_{SYN}$) durch Frequenzteilung abgeleitet wird.

9. Verfahren nach Anspruch 6, **dadurch gekennzeichnet, daß** die Choppertaktfolge ($T_{CH}$) durch Frequenzvervielfachung aus einer Graviertaktfolge ($T_G$) abgeleitet wird, deren Frequenz der Frequenz des Rastersignals entspricht.

10. Verfahren nach einem der Ansprüche 6 bis 9, **dadurch gekennzeichnet, daß** die Frequenz der Choppertaktfolge ($T_{CH}$) ein Vielfaches der Frequenz der Graviertaktfolge ($T_G$) bzw. der Frequenz des periodischen Rastersignals ist.

11. Schaltungsanordnung zur Signalbearbeitung in einer elektronischen Graviermaschine zur Gravur von Druckzylindern, für den Tiefdruck, mittels eines durch ein Graviersteuersignal (G) gesteuerten Gravierorgans (4), bestehend aus

a) einem Gravurdatenspeicher (8) zur Bereitstellung von Gravurdaten GD, welche die zu gravierenden Tonwerte zwischen "Schwarz" und "Weiß" repräsentieren,

b) einer mit dem Gravurdatenspeicher (8) verbundenen und mit den Gravurdaten GD beaufschlagten Signalprozessor (13) zur Erzeugung von Graviersteuerdaten GSD, in dem

> b$_1$) Funktionswertdaten FD eines periodischen Rastersignals zur Erzeugung eines Rasters in einem ersten Tabellenspeicher (36) bereitgestellt werden,
> b$_2$) digitale Einstellparameter EP$_L$, EP$_T$ zur Kalibrierung des Graviersteuersignals (G) zwischen den Tonwerten "Schwarz" und "Weiß" in einem ersten und zweiten Parameterspeicher (36, 37) bereitgestellt werden,
> b$_3$) Korrekturdaten KD für eine Schnittiefenkorrektur zwecks Ausgleich einer mechanischen Abnutzung des Gravierstichels des Gravierorgans (4) in einem zweiten Tabellenspeicher (35) bereitgestellt werden,
> b$_4$) Gravurdaten GD, Funktionswertdaten FD, Einstellparameter EP$_L$, EP$_T$ und Korrekturdaten KD als Eingangsgrößen durch die Übertragungskoeffizienten k$_n$ einer digitalen Übertragungsfunktion in Multiplizierstuten (39, 40, 41, 42, 43) gewichtet werden,
> b$_5$) die Eingangsgrößen und/oder die Übertragungskoeffizienten k$_n$ der Übertragungsfunktion durch Steuerdaten (SD) verändert werden und
> b$_6$) die gewichteten Eingangsgrößen durch die digitale Übertragungsfunktion in einem Rechner (44) miteinander verknüpft und numerisch in Gravursteuerdaten GSD als Ausgangsgröße gemäß der Beziehung

$$GSD = [(k_1 \times GD + k_2 \times KD) \times (k_3 \times EP_L) + k_4 \times EP_T] + k_5 \times FD$$

> umgewandelt werden,

> c) einem dem Signalprozessor (13) nachgeschalteten D/A-Wandler (15) zur Umwandlung der Graviersteuerdaten GSD in das analoge Graviersteuersignal und
> d) einem dem D/A-Wandler (15) nachgeschalteten und mit dem Gravierorgan (4) verbundenen Verstärker (16) zur Verstärkung des analogen Graviersteuersignals (G).

**12.** Schaltungsanordnung nach Anspruch 11, **<u>dadurch gekennzeichnet, daß</u>** der Signalprozessor (13) als Digitaler Signal Prozessor (DSP) ausgebildet ist.

**13.** Schaltungsanordnung nach Anspruch 11 oder 12, **<u>dadurch gekennzeichnet, daß</u>** der Verstärker (16) als geschalteter Stromverstärker ausgebildet ist.

**14.** Schaltungsanordnung nach Anspruch 13, **<u>dadurch gekennzeichnet, daß</u>** der geschaltete Stromverstärker (16) aus folgenden Komponenten besteht:

- mindestens einer Spannungsquelle (21 bzw. 22)
- zwei in Reihe geschalteten und durch pulsbreitenmodulierte Steuersignale (S$_1$, S$_2$) steuerbaren elektronischen Schaltern (23, 24), die zwischen den Spannungsquellen (21, 22) bzw. zwischen der einen Spannungsquelle (21)bzw. 22) und Masse geschaltet sind,
- einem Siebglied (26), dessen Eingang mit den beiden elektronischen Schaltern (23, 24) verbunden ist und dessen Ausgang den Ausgang des Stromverstärkers (16) bildet und
- einen mit den elektronischen Schaltern (23, 24) verbundenen Impulsbreitenmodulator (25) zur Erzeugung der Steuersignale (S$_1$, S$_2$).

**15.** Schaltungsanordnung nach Anspruch 14, **<u>dadurch gekennzeichnet, daß</u>** der Impulsbreitenmodulator (25) aus einem Regelverstärker (28), einem Komparator (29) und einem Vergleichsgenerator (30) besteht.

**16.** Schaltungsanordnung nach Anspruch 14, **<u>dadurch gekennzeichnet, daß</u>** der Impulsbreitenmodulator (25) aus einem Timer (36) besteht.

## Claims

**1.** Method for signal processing in an electronic engraving machine for the engraving of printing cylinders for intaglio printing by means of a stylus of an engraving head (4) under the control of an analogue engraving control signal (G), wherein

a) gravure data GD representing tone values between "black" and "white" to be engraved are supplied,

b) functional value data FD of a periodic screen signal for generating a screen are supplied,

c) digital setting parameters $EP_L$, $EP_T$ for calibrating the engraving control signal (G) between the tone values "black" and "white" are supplied,

d) correction data KD for depth-of-cut correction to compensate for mechanical wear of the stylus of the engraving head (4) are supplied,

e) the gravure data GD, functional value data FD, digital setting parameters $EP_L$, $EP_T$ and correction data KD are weighted as input quantities by the transfer coefficients $k_n$ of a transfer function,

f) the input quantities and/or transfer coefficients $k_n$ of the transfer function are modified by control data (SD),

g) the weighted input quantities are linked with each other by the digital transfer function and numerically converted into engraving control data GSD as output quantity in accordance with the relation

$$GSD = [(k1 \times GD + k2 \times KD) \times (k3 \times EPL) + k4 \times EPT] + k5 \times FD$$

and

h) the engraving control data GSD are converted into the analogue and amplified engraving control signal (G) for the engraving head (4), a series of cells arranged in the screen being engraved in the printing cylinder (1) by the stylus of the engraving head as the engraving head (4) advances along the printing cylinder (1) in the axial direction of the printing cylinder to cover an area of the printing cylinder (1) with engraved cells.

2. Method according to Claim 1, **characterized in that** a digital signal processor (13) is used for the signal processing.

3. Method according to Claim 1 or Claim 2, **characterized in that**

- a synchronizing pulse train ($T_{SYN}$) is generated from the rotary motion of the printing cylinder (1), and
- the signal processing is controlled by means of the transfer function by a pulse train ($T_G$) derived from the synchronizing pulse train ($T_{SYN}$) by frequency division.

4. Method according to Claim 3, **characterized in that** the frequency of the derived pulse train ($T_G$) corresponds to the frequency of the periodic screen signal.

5. Method according to any one of Claims 1 to 4, **characterized in that** the analogue engraving control signal (G) for driving the engraving head (4) is amplified in a switched current amplifier (16).

6. Method according to Claim 5, **characterized in that** the switched current amplifier (16) is synchronized by a chopper pulse train ($T_{CH}$).

7. Method according to Claim 6, **characterized in that**

- the chopper pulse train ($T_{CH}$) is generated in a pulse generator which is not synchronized with the rotary motion of the printing cylinder (1), and
- the frequency of the chopper pulse train ($T_{CH}$) is modulated by a noise signal.

8. Method according to Claim 6, **characterized in that**

- a synchronizing pulse train ($T_{SYN}$) derived from the rotary motion of the printing cylinder (1) is generated, and
- the chopper pulse train ($T_{CH}$) is derived from the synchronizing pulse train ($T_{SYN}$) by frequency division.

9. Method according to Claim 6, **characterized in that** the chopper pulse train ($T_{CH}$) is derived by frequency multiplication from an engraving pulse train ($T_G$) whose frequency corresponds to the frequency of the screen signal.

10. Method according to any one of Claims 6 to 9, **characterized in that** the frequency of the chopper pulse train ($T_{CH}$) is a multiple of the frequency of the engraving pulse train ($T_G$) i.e. of the frequency of the periodic screen signal.

11. Circuit arrangement for signal processing in an electronic engraving machine for the engraving of printing cylinders for intaglio printing by means of an engraving head (4) controlled by an engraving control signal (G), consisting

a) of a gravure data memory (8) for supplying gravure data GD representing tone values between "black" and "white" to be engraved,

b) of a signal processor (13) connected to the gravure data memory (8) and fed with the gravure data GD to generate engraving control data GSD, in which

b1) functional value data FD of a periodic screen signal for generating a screen are supplied in a first table memory (36),

b2) digital setting parameters $EP_L$, $EP_T$ for calibrating the engraving control signal (G) between the tone values "black" and "white" are supplied in first and second parameter memories (36, 37),

b3) correction data KD for a depth-of-cut correction to compensate for mechanical wear of the stylus of the engraving head (4) are supplied in a second table memory (35),

b4) gravure data GD, functional value data FD, setting parameters $EP_L$, $EP_T$ and correction data KD are weighted as input quantities by the transfer coefficients $k_n$ of a digital transfer function in multiplier stages (39, 40, 41, 42, 43),

b5) the input quantities and/or the transfer coefficients $k_n$ of the transfer function are modified by control data (SD), and

b6) the weighted input quantities are linked with each other by the digital transfer function and numerically converted into engraving control data GSD as output quantity in accordance with the relation

$$GSD = [(k1 \times GD + k2 \times KD) \times (k3 \times EPL) + k4 \times EPT] + k5 \times FD$$

in a computer (44),

c) of a D/A converter (15) downstream of the signal processor (13) for converting the engraving control data GSD into the analogue engraving control signal, and

d) of an amplifier (16) downstream of the D/A converter (15) and connected to the engraving head (4), for amplifying the analogue engraving control signal (G).

**12.** Circuit arrangement according to Claim 11, **characterized in that** the signal processor (13) is configured as a digital signal processor (DSP).

**13.** Circuit arrangement according to Claim 11 or Claim 12, **characterized in that** the amplifier (16) is configured as a switched current amplifier.

**14.** Circuit arrangement according to Claim 13, **characterized in that** the switched current amplifier (16) consists of the following components:

- at least one voltage source (21 and/or 22),
- two series-connected electronic switches (23, 24) which are controllable by pulse-width-modulated control signals (S1, S2) and are connected between the voltage sources (21, 22) or between the single voltage source (21 or 22) and earth,
- a filtering unit (26) whose input is connected to both electronic switches (23, 24) and whose output constitutes the output of the current amplifier (16), and
- a pulse-width modulator (25) connected to the electronic switches (23, 24), for generating the control signals (S1, S2).

**15.** Circuit arrangement according to Claim 14, **characterized in that** the pulse-width modulator (25) consists of an automatic gain control amplifier (28), a comparator (29) and a reference oscillator (30).

**16.** Circuit arrangement according to Claim 14, **characterized in that** the pulse-width modulator (25) consists of a timer (36).


**Revendications**

**1.** Procédé de traitement des signaux dans une machine électronique de gravure de cylindres d'impression héliographique, au moyen d'un poinçon d'un organe de gravure (4) commandé par un signal analogique de gravure (G),

selon lequel

a) on met à disposition les données de gravure GD représentant les nuances à graver entre « noir » et « blanc »,

b) on met à disposition les données des valeurs de fonction FD et un signal périodique de trame pour produire une trame,

c) on met à disposition des paramètres numériques de réglage $EP_L$, $EP_T$ pour calibrer le signal de commande de gravure G entre les tonalités « noir » et « blanc »,

d) on met à disposition des données de correction KD de la profondeur de gravure pour compenser une usure mécanique de poinçon de l'organe de gravure (4),

e) on pondère les données de gravure GD, les données de valeurs de fonction FD, les paramètres numériques de réglage $EP_L$, $EP_T$ et les données de correction KD en tant que grandeurs d'entrée, par les coefficients de transfert $k_n$ d'une fonction de transfert,

f) les données d'entrée et/ou les coefficients de transfert $k_n$ de la fonction de transfert sont modifiées par des données de commande (SD),

g) les données d'entrée pondérées par la fonction de transfert sont connectées entre elles et transformées numériquement en données de commande de gravure GSD en tant que grandeurs de sortie selon la relation,

$$GSD=[(k_1 xGD + k_2 xKD) \times (k_3 xEP_L) + k_4 xEP_T] + k_5 xFD$$

h) les données de commande de gravure GSD sont transformées pour donner le signal de commande de gravure (G) analogique et amplifié destiné à l'organe de gravure (4), de sorte que le poinçon de cet organe grave dans le cylindre d'impression (1) une succession de petites cuvettes disposées en trame, et pour étaler la gravure des cuvettes l'organe de gravure exécute le long du cylindre d'impression (1) un mouvement de coulissement selon la direction axiale de ce cylindre.

2. Procédé selon la revendication 1,
   **caractérisé en ce qu'**
   un processeur à signal numérique (13) est utilisé pour traiter le signal.

3. Procédé selon l'une quelconque des revendications 1 ou 2,
   **caractérisé en ce que**

   - la rotation du cylindre d'impression (1) génère une cadence de synchronisation ($T_{SYN}$), et
   - le traitement du signal par la fonction de transfert est commandé par une cadence ($T_G$) dérivée de la cadence ($T_{SYN}$) par division de la fréquence.

4. Procédé selon la revendication 3,
   **caractérisé en ce que**
   la fréquence de la cadence dérivée ($T_G$) correspond à la fréquence du signal périodique de trame.

5. Procédé selon l'une quelconque des revendications 1 à 4,
   **caractérisé en ce que**
   le signal analogique de gravure (G) servant à commander l'organe de gravure (4) est amplifié dans un amplificateur connecté (16).

6. Procédé selon la revendication 5,
   **caractérisé en ce que**
   l'amplificateur (16) connecté est synchronisé par une cadence de Chopper ($T_{CH}$).

7. Procédé selon la revendication 6,
   **caractérisé en ce que**

   - la cadence de Chopper ($T_{CH}$) est produite dans un générateur de rythme qui n'est pas synchronisé avec la rotation du cylindre d'impression (1), et
   - la fréquence de la cadence de Chopper ($T_{CH}$) est modulée par un signal de bruit.

**8.** Procédé selon la revendication 6,
**caractérisé en ce qu'**

- on produit une cadence de synchronisation ($T_{SYN}$) dérivée de la rotation du cylindre d'impression (1), et
- la cadence de Chopper ($T_{CH}$) est dérivée de la cadence de synchronisation ($T_{SYN}$) par division de fréquence.

**9.** Procédé selon la revendication 6,
**caractérisé en ce que**
la cadence de Chopper ($T_{CH}$) est dérivée, par multiplication de fréquence, d'une cadence de gravure ($T_G$) dont la fréquence correspond à celle du signal de trame.

**10.** Procédé selon l'une quelconque des revendications 6 à 9,
**caractérisé en ce que**
la fréquence de la cadence de Chopper ($T_{CH}$) est un multiple de la fréquence du signal périodique de trame.

**11.** Circuit pour le traitement du signal dans une machine électronique de gravure de cylindres d'impression hélio, utilisant un organe de gravure (4) commandé par un signal de commande de gravure (G), comprenant :

a) une mémoire de données de gravure (8) pour mettre à disposition des données de gravure GD représentant les tonalités à graver entre « noir » et « blanc »,
b) un processeur de signaux (13) pour produire des données de commande de gravure GSD, relié à la mémoire de données de gravure (8) et actionné par les données de gravure GD, processeur dans lequel :

$b_1$) des données de valeurs de fonction FD d'un signal périodique pour produire une trame sont tenues à disposition dans une mémoire à tableaux (36),
$b_2$) pour calibrer le signal de commande de gravure (G) entre les tonalités « noir » et « blanc », des paramètres numériques de réglage $EP_L$, $EP_T$, sont disponibles dans une première et une seconde mémoire de paramètres (37, 38),
$b_3$) pour corriger la profondeur de taille afin de compenser l'usure mécanique du poinçon de l'organe de gravure (4), des données de correction KD sont mises à disposition dans une seconde mémoire à tableaux (35),
$b_4$) des données de gravure GD, des données de valeurs de fonction FD, des paramètres de réglage $EP_L$, $EP_T$ et des données de correction KD en tant que grandeurs d'entrée sont pondérées par les coefficients de transfert $k_n$ d'une fonction numérique de transfert, dans des étages multiplicateurs (39, 40, 41, 42, 43),
$b_5$) les grandeurs d'entrée et/ou les coefficients de transfert $k_n$ de la fonction de transfert sont modifiés par des données de commande (SD), et
$b_6$) les données d'entrée pondérées sont connectées entre elles par la fonction de transfert dans un calculateur (44) et transformées numériquement en données de commande de gravure GSD en tant que grandeurs de sortie, selon la relation :

$$GSD=[(k_1 \text{x} GD + k_2 \text{x} KD) \text{ x } (k_3 \text{x} EP_L) + k_4 \text{x} EP_T] + k_5 \text{x} FD$$

c) un convertisseur continu-alternatif (15) monté en aval du processeur de signaux (13) pour transformer les données de commande de gravure GSD, en signal analogique de commande de gravure,
d) un amplificateur (16) monté en aval du convertisseur (15) et relié à l'organe de gravure (4), pour amplifier le signal de commande de gravure (G).

**12.** Circuit selon la revendication 11,
**caractérisé en ce que**
le processeur de signal (13) est un processeur à signal numérique (DSP).

**13.** Circuit selon l'une quelconque des revendications 11 ou 12,
**caractérisé en ce que**
l'amplificateur (16) est un amplificateur de courant connecté.

**14.** Circuit selon la revendication 13,
**caractérisé en ce que**

l'amplificateur de commande (16) connecté comprend les composants suivants :

- au moins une source de tension (21 ou 22),
- deux contacteurs électroniques (23, 24) reliés en série et pouvant être commandés par des signaux de commande ($S_1$, $S_2$) modulés en amplitude d'impulsions, ces contacteurs étant montés entre les deux sources de tension (21, 22) ou entre l'une d'elle (21 ou 22) et la masse,
- un organe de filtrage (26) dont l'entrée est reliée aux deux contacteurs électroniques (23, 24) et dont la sortie constitue la sortie de l'amplificateur (16), et
- un modulateur d'amplitude d'impulsion (25) relié aux contacteurs électroniques (23, 24) pour produire les signaux de commande ($S_1$, $S_2$).

15. Circuit selon la revendication 14,
**caractérisé en ce que**
le modulateur d'amplitude d'impulsion (25) est composé d'un amplificateur à gain variable (28), d'un comparateur (29) et d'un générateur de référence (30).

16. Circuit selon la revendication 14,
**caractérisé en ce que**
le modulateur d'amplitude d'impulsion (25) est une horloge (36).

T<sub>Syn</sub>

T<sub>Syn</sub>

Fig.1

Fig.2

EP 0 986 468 B1

Fig.3

EP 0 986 468 B1

Fig. 4

EP 0 986 468 B1

GD

9

T_G

35   37   38   36

KD   EP_Licht   EP_Tiefe   FD

9

SD

39   40   42   43   41

k_1   k_2   k_4   k_5   k_3

15'

B

D/A

A

D/A

15

44

+

G

EP 0 986 468 B1